(19) Europäisches Patentamt

European Patent Office

Office européen des brevets

(11) Publication number: **0 058 846**
**B1**

(12) **EUROPEAN PATENT SPECIFICATION**

(45) Date of publication of patent specification: **13.07.88**

(51) Int. Cl.⁴: **G 06 F 12/12**

(21) Application number: **82100722.6**

(22) Date of filing: **02.02.82**

(54) **Multiprocessing system with variably shared paging storage.**

(30) Priority: **19.02.81 US 235806**

(43) Date of publication of application:
**01.09.82 Bulletin 82/35**

(45) Publication of the grant of the patent:
**13.07.88 Bulletin 88/28**

(84) Designated Contracting States:
**BE CH DE FR GB IT LI NL SE**

(56) References cited:
IBM TECHNICAL DISCLOSURE BULLETIN, vol.
19, no. 7, December 1975, pages 2709-2714,
New York, US; R.L. MATTSON: "Storage
management of linear lists by ordinal
numbers"

IBM TECHNICAL DISCLOSURE BULLETIN, vol.
18, no. 7, December 1975, pages 2378-2380,
New York, US; H.A. ANDERSON, Jr.: "Least
likely to be serviced page replacement
algorithm"

(73) Proprietor: **International Business Machines
Corporation
Old Orchard Road
Armonk, N.Y. 10504 (US)**

(72) Inventor: **Mattson, Richard Lewis
6838 Rockview Court
San Jose California 95120 (US)**
Inventor: **Rodriquez-Rosell, Juan Antenor
20405 Highland Hall Drive
Gaithersburg Maryland 20760 (US)**

(74) Representative: **Grant, Iain Murray
IBM United Kingdom Limited Intellectual
Property Department Hursley Park
Winchester Hampshire SO21 2JN (GB)**

(56) References cited:
IBM TECHNICAL DISCLOSURE BULLETIN, vol.
18, no. 11, April 1976, pages 3824-3825, New
York, US; D.R. SLUTZ: "Interval stack
processing for least recently used replacement
algorithm"

Courier Press, Leamington Spa, England.

## Description

The present invention relates to methods of partitioning storage in a multiprocessing system having shared paging storage and wherein a storage manager, inter alia, partitions the shared storage into sections private to individual processes. This is a form of paging constraint and it is known that performance can be potentially improved if the sector sizes are tuned to the aggregate process requirements thus rendering the constraint variable. Various proposals have been made for mechanisms to determine the optimum partitioning in given circumstances, see, for example, "Fast Approximation Algorithms for Knapsack Problems", Lawler, Mathematics of Operations Research, Vol. 4, November 1979, pp 339—356, but are not practical in that they do not enable economic dynamic partitioning since, without the use of a technology considerably faster than that of the remainder of the system, they can only be used off-line and not in real time. The present invention seeks to provide, in the storage manager, a mechanism permitting effective dynamic partitioning.

The present invention provides a method for partitioning memory space in a multiprocessing system having shared paging storage and a storage manager therefor partitioning it into sectors private to individual running processes, enforcing a common replacement protocol across the sectors and enabling address translation, read and write accessing, erasing and updating characterised in that, in addition to the maintenance of those facilities appropriate to the actual exercising of the shared storage, the storage manager maintains, for each running process, a list of ordered segment hit counts for each of an ordered sequence of segments (segment string) of a fictional maximum sector, the segments not all being of the same page capacity, and an ordered page identity stack of a capacity equal to the page capacity of the fictional maximum sector, each position in the stack uniquely associating the page identity, if any, contained therein with one of the fictional segments, the order of page indentities in the stack being adjusted in response to each actual page access (including additions and deletions) to represent the relative replacement order of the corresponding pages, the actual accessing of a page causing the hit count for the segment corresponding to the stack position containing the page identity at the time of the access to be incremented, the storage manager determining the optimum partitioning, and so partitioning the storage, by totalling the hit counts for each of the various combinations of segment string lengths of all the lists representing an aggregate segment page capacity not exceeding the available storage page capacity, determining the highest total and defining the sectors in terms of the aggregate segment page capacity of the lengths of the segment strings providing that highest total.

Repartitioning can be performed more or less as required but it is thought to be most efficient if it is performed each time a new process is invoked and, in addition, periodically. It may also be performed each time a process is deleted.

The following references are illustrative of the state of the art. Mattson, et al, "Evaluation Techniques for Storage Hierarchies", IBM Systems Journal No. 2, 1970, pages 78—117, teaches that hit/miss ratios for a given LRU page replacement method in a storage hierarchy can be measured as a function of data set groups and cache size in a single pass. Advantageously, the time required is proportional to the data base size.

Mattson, "Storage Management of Linear Lists by Ordinal Numbers", IBM Technical Disclosure Bulletin, Vol. 19, December 1976, pages 2709—2714, describes a method and means for determining the stack distance of the currently referenced item and then updating of the entire stack in a single memory READ/WRITE cycle for cache-stored LRU lists. Advantageously, the lists could be maintained in real time without slowing the CPU. In this regard, both storage management and system measurement using LRU page replacements could be accomplished at considerable hardware expense, the amount of hardware again being proportional to the data base size. Additionally, this reference merely sets forth the determination of cache size. It does not teach the selection of what prospective data set group is to be placed in the cache.

It is thought necessary, at this stage, to establish certain term definitions and concepts. A process is an entity which requires use of the shared storage. It may be a task, program, processor or other functional unit. Thus, when a processor, for example, it is invoked when it places a demand for use of the shared storage and is deleted when it relinquishes such a demand. Further, since in modern computers, constraints are applied by the addressing logic of a random access store, sectors and segments are logical entities and not physical entities. Moreover, a list or stack is also a logic entity. For example, the lists of hit counts can be formed in ordered sets of physical counters or in registers and an ordered stack can be implemented physically, as by a shift register or as an address selected and ordered set of locations.

A conventional paging store or cache comprises a fixed number of page frames into which pages of data are copied from bulk storage. The capacity of the paging store is much less than the capacity of bulk storage, as is its cycle time, and a replacement protocol is observed. It is quite usual to apply a constraint to the transfer of pages, and, in the type of system to which this specification relates, the constraint is that pages required by a given process can be transferred only to given page frames, is exercised by the addressing logic and is variable, being established by the storage manager, producing a logically partitioned store although, physically, it is a homogenious random access store. The present invention modifies the storage manager to perform additional specific functions in order that it can determine, with the minimum of overhead, the optimum partitioning of the paging store in relation to current operating criteria so that the paging store can be repartitioned dynamically. To this end, quite apart from its conventional logging of the actual use of the paging store, it additionally logs the use that would have been made by each process of a number of hypothetical sectors. In fact, only one of these sectors exists for each process, but it would not really matter if none of them did. Many factors may be logged, but the key factor is the number of hits that would have been made in the immediately preceding operating period had the associated process actually had a private sector available to it of the capacity of each particular hypothetical sector. However, the hit counts cannot be logged directly because of the lack of one to one correspondence between the actual sectors and the hypothetical sectors. Moreover, a compromise is made as to the number of hypothetical sector sizes considered so that, in general, each hypothetical sector size is more than one page larger than the size of the next smaller sector size. This renders the granularity more coarse and the tuning theoretically less precise but gains considerably in reduced overhead.

Accordingly, the storage manager creates and maintains two associated tools which it uses when required to make a partitioning decision, preferably, whenever a new process is invoked, as well as at regular intervals as determined by the system timer and, optionally, also whenever a process is deleted. The first tool is a list of ordered segment hit counts for each of a ordered sequence of segments, not all of the same size, which together have a page capacity equal to that of a fictional maximum sector. The second tool is an ordered stack which relates actual pages accessed to the fictional segments of the fictional sectors. The essential stack entries are page identities which are moved around the stack so that the order of page identities within the stack reflects the actual replacement order of the pages, the page identity capacity of the stack equals the fictional sector page capacity and the individual stack locations directly associate the page identities, if any, contained therein with the fictional segments. The ordering within both tools is critical. Although a selection, as to the start and finish of the list, the top and bottom of the stack and which replacement protocol is to be observed, is possible, once established, the ordering protocol must be strictly adhered to. Assuming a least recently used replacement protocol, with the top of the stack being associated with the most recently used page and the bottom of the stack with the least recently used page and sectors imcrementing by segment from the start of the list to the end of the list, the tools are maintained as follows:—

When an actual page is accessed in a page frame, the corresponding page identity is entered at the top of the stack and the remaining stack contents pushed down and out, if and as necessary. If that page identity was previously in the stack, the hit count for the fictional segment to which the stack location containing that entry corresponds is incremented;

When a page is deleted, the page entry is deleted from the stack.

The combined effect of these operations is to maintain an ordered list of hit counts which records, not the actual hits made, but how many more hits would have been made per additional segment, if the corresponding sector had contained the additional page capacity of that segment. In other words, a sector of the capacity of the aggregate of the first E segments in list order would have secured hits equal in number to the aggregate of the first E hit counts in list order. These list of counts are very nearly the data required to determine optimum partitioning and are maintainable, in realistic terms, in real time.

The actual determination involves generating hit totals for all the possible segment string, or in other words, sector size, combinations which do not have a capacity greater than the capacity of the shared storage and selecting the highest hit total and this, in practice, reduces to very nearly a real time process, certainly in terms of storage access times, because the number of combinations possible is strictly limited and known beforehand. Assume a new process is invoked, being given a standard sector since this is no data available relative thereto, then repartitioning of running processes reduces to examining (register accessing, adding and comparing) all possible combinations of known consecutive segment storing counts equal in number to the number of running processes which do not represent a total page capacity greater than the page capacity of the shared storage less the page capacity of the standard sector. Similar criteria apply to the other listed repartitioning circumstances. For a given environment, these are all known and can be retained in tabular form. Moreover, the greater the number of sectors, the fewer the number of possible segment strings within each. Further, the highest hit total, if unique, uniquely identifies the total sought sector configuration.

There is a further point to note in that a suitable choice of segment sizes will help. Ideally the smaller segments should combine to exactly equal the capacity of a larger segment, say 3; 4; 10 as in the case illustrated hereinafter.

The present invention will be described further by way of example with reference to the accompanying drawings which illustrate one embodiment of the invention and also illustrate one example of the prior art.

In the drawings:—

Fig. 1 sets out both an ordered list and table representing a partition of an LRU stack into equivalence classes.

Fig. 2 represents a natural number item ordering of the LRU stack in Fig. 1.

Figs. 3 and 4 show respective processing of READ/WRITE or ERASE references to a cache according to the method of the invention.

Fig. 5 illustrates cache manager operations according to the prior art.

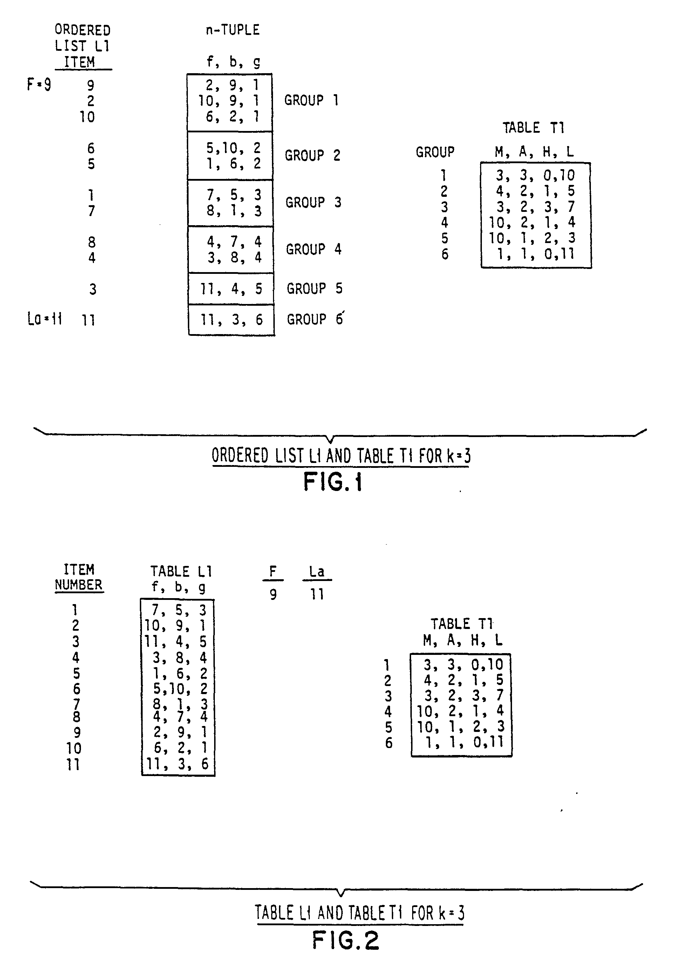

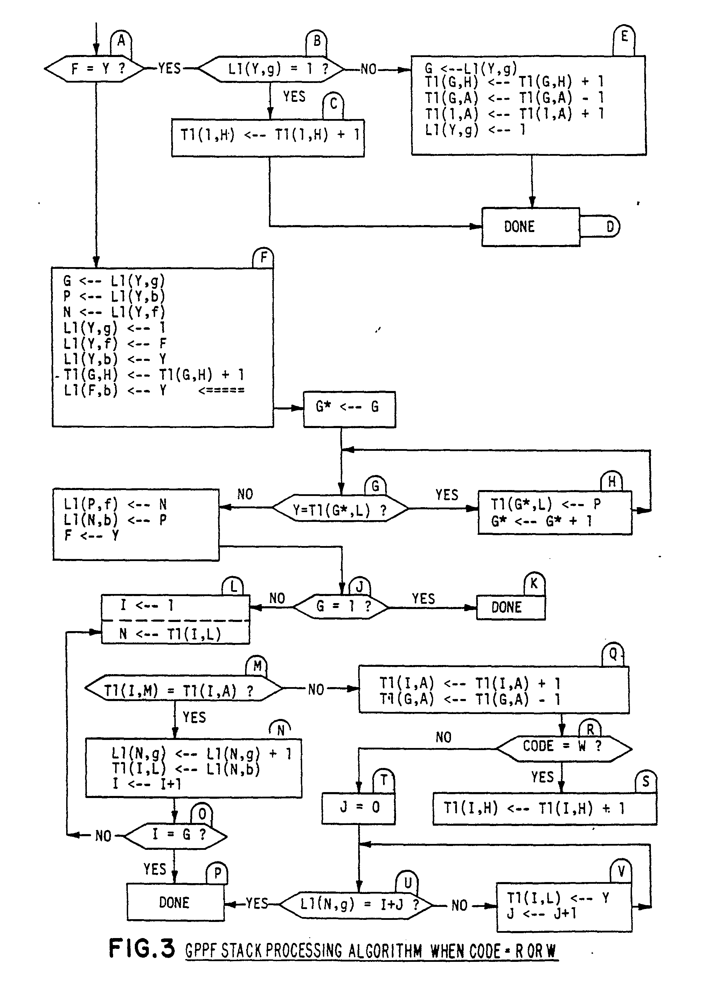

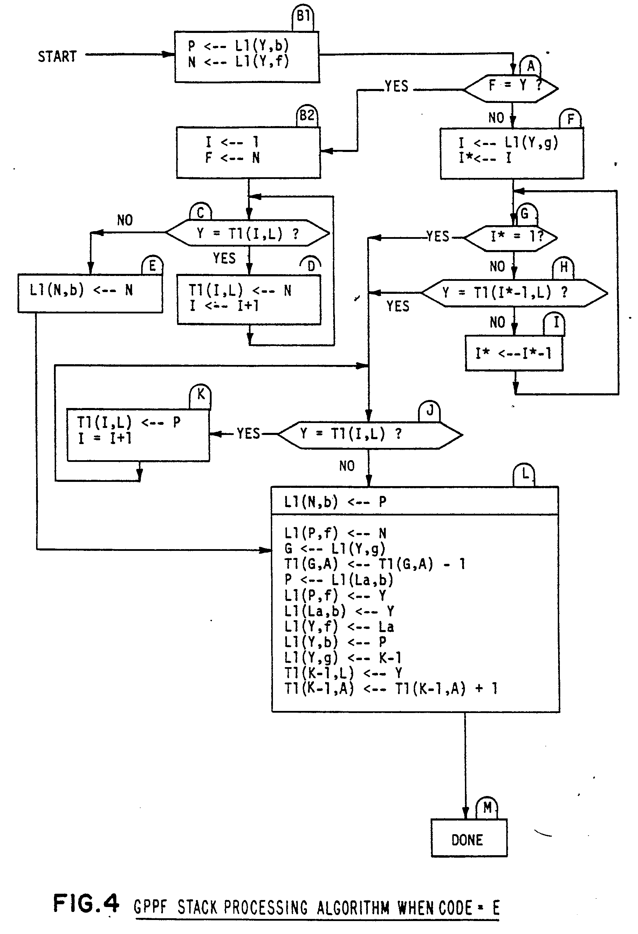

This invention is directed to two problems. The first is ascertaining the hit/miss ratio as a function of cache size; and the second, is using such determination to dynamically allocate cache among contending processes. Since the invention is executable by a CPU accessing a demand paging hierarchical storage system, a brief description of a prior art cache manager is introduced. This is followed by a detailed discussion of Figs. 1 and 2 relating to the organisation and modification of the two data constructs critical to the invention. After this, a discussion of the processing of READ/WRITE and ERASE references according to the method of the invention will centre on Figs. 3 and 4. Lastly, an IBM System/370 assembly level execution sequence shall complete the preferred embodiment description. The assembly level sequences illustrate the necessary reference processing and cache management. An association is provided between the principal method steps depicted in the flow diagram of Figs. 3 and 4 and the assembly level sequences.

The IBM System 370 Environment

The method of this invention is executable upon a computing system of the type including one or more CPU's, each having a main store, input/output channel control unit, direct access storage devices, and other I/O devices coupled thereto. Such a system is described in G. M. Amdahl, et al, USP 3,400,371, issued 9/3/68, and entitled, "Data Processing System". The Amdahl system includes as a resource all of the facilities of either the computing system or of the operating system running thereon which is required for the execution of a process. Typical resources include a main store, I/O devices, the CPU, data sets, and control or processing programs. Furthermore, said systems are capable of "multiprogramming". This pertains to the concurrent execution of two or more processes by a computing system, and can be managed on a computer running under IBM System/360 Operating System, as described in IBM Publication GC28—6646, July 1973, and listed in IBM System/360 Bibliography, GA22—6822.

This invention is intended to be utilised in an operating system environment that contains a conventional data management facility, manages auxiliary storage, and provides traditional program compiler and assembly capabilities. Although assembly level language is described in the aforementioned Amdahl patent and IBM publications, a further introduction may be found in "A Programmer's Introduction to IBM System/360 Assembler Language". This bears an IBM catalogue number of SC20—1646—6, as reprinted in November 1979. In this regard, the method steps are expressed in source assembly level language statements to be found in Tables 1 and 2.

CPU Accessing of Attached DASD

Data sets are frequently stored on DASD volumes. A CPU's relationship to a DASD begins when the CPU invokes the START I/O instruction. This instruction serves to establish a connection between the CPU and addressed device and the execution of a channel program with the device. The invocation of the START I/O instruction causes control to be relinquished to a series of channel commands. This series or chain of channel commands (CCW's) is, in turn, sent over a channel to a control unit for the purpose of selecting and accessing the device and effectuating the data movement across the interfaces. Each channel program consists of a sequential list of operations resident in the CPU main memory. The transmission to and execution at the control unit of the CCW's takes place only after initial connection between the CPU and the control unit takes place. For each operation (CCW) in the channel program, one or more counterpart operations are required either at the control unit or device level over an active connection. The first active connection is that of an initial selection sequence. This sequence is invoked with a start I/O operation in which an initial path is set up both electrically and logically in terms of device address (virtual/real) and device status (available/busy). The next active connection relates to that of a CCW transfer and execution. A control CCW, such as SEEK, requires physical positioning or activity at the device. A control unit, in response to receipt of the control CCW, can execute the CCW in disconnected mode. In contrast to disconnected modes, CCW's involving the movement or transfer of data between the channel and the device, such as READ or WRITE CCW's, require the control unit to remain connected to the channel in order to effectuate the data transfer. A typical system configuration, including multiple CPU's accessing shared devices over logically independent paths, is described in Luiz, et al, USP 4,207,609, entitled "Method and Means for Path Independent Device Reservation and Reconnection in a Multi-CPU and Shared Device Access System", issued June 10, 1980.

Accessing Hierarchical Storage Using Cache Management

A hierarchical storage system differs from that shown in the Amdahl and Luiz references only in the provision of one or more buffered stages interposed between the DASD and the CPU. Where, for example, the cache is within the CPU operating in multiprogramming mode, a cache manager function of the operating system regulates access among requesting processes. As mentioned, a cache is usually a random access high-speed memory in which a selected number of referenceable items are located, rather than in a lower speed backing store (DASD).

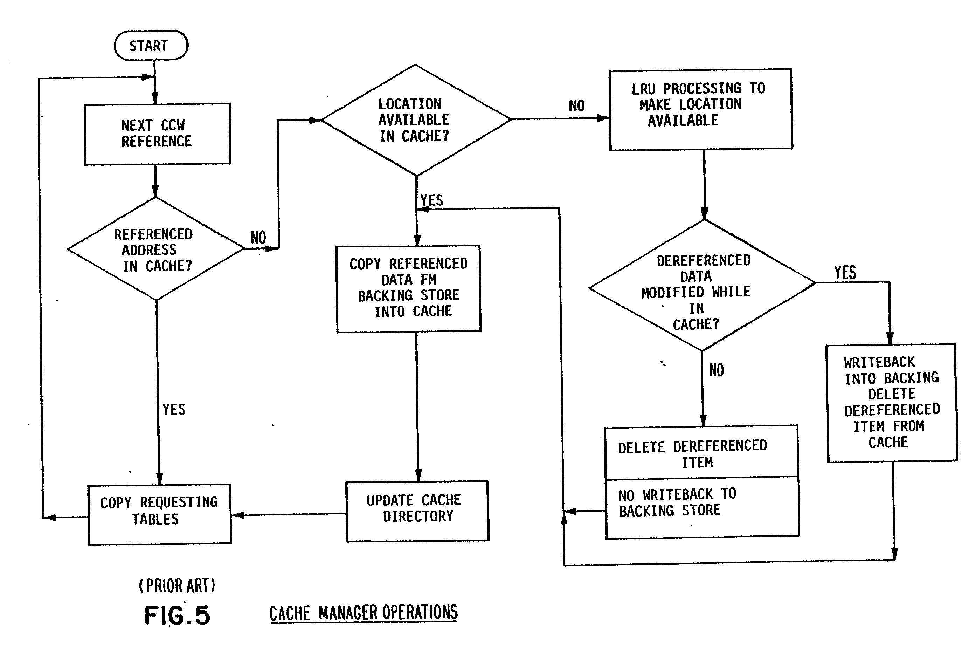

Referring now to Fig. 5, there is shown a flow diagram of cache function. Thus, a CPU accesses the storage subsystem by way of generating a READ or WRITE CCW. In this regard, the cache manager intercepts each CCW reference to storage and ascertains whether the contents of the reference location were previously copied within the cache. If not, the reference is passed to DASD. The references passed to DASD are staged up to the requesting process. The cache manager also copies the contents of the reference location into cache and updates the cache directory. This involves the determination of whether a cache location is available and, if not, making room therefor according to a destaging algorithm, such as

4

LRU. If the cache is full and it is necessary to dereference the data to make room, a WRITEBACK to the DASD is executed only if the contents of the cache location were modified. Otherwise, only deletion in cache is required. If the contents of the reference location are in cache, then the requesting process is copied. If the reference data is not in cache but a location is available, then the reference data is copied from the backing store into cache, the cache directory is updated, and the requesting process is copied.

The Components of Dynamic Page Group and Cache Size Selection

The invention consists of two communicating components — a data collection component and an analysis component. When the data collection component is invoked, it continually collects the time sequence of requests to items in the various data sets and the data base. After each START I/O instruction has been successfully executed by the CPU, a scan is made of the sequence of CCW's about to be executed by the channel. Typical information recorded about each CCW reference includes (1) a flag indicating the start of a channel program; (2) the type of channel program, such as FETCH, SWAP; (3) the type of operation, such as SEEK, READ/WRITE, ERASE; (4) the physical address of the item being referenced by way of channel, device, cylinder, track, and record; and (5) flags indicative of multitrack searching and data chaining involved in the operation. The determination of this sample size and frequency of collecting reference traces which would constitute an optimally efficient set for analysis, is not believed within the scope of this invention. However, it is believed preferable to periodically process a trace of consecutive references rather than either continuously or aperiodically sampling.

The data analysis component has the objective of determining for each data group the hit ratio for p different values of cache size and at appropriate time intervals to select cache sizes for each data group, such that the number of hits to the system cache from all data groups is maximised. The determination of hit ratio as a function of cache size requires operation upon two data structures. In this regard, reference should be made to Fig. 1. This shows an ordered list (L1) and a table (T1). The ordered list of numbers constitutes a most recently referenced sequence of references to disc tracks. The data structure denoting the ordered list entry includes an n-tuple consisting of a forward pointer f, a backward pointer b, and a group number g. The forward pointer identifies the next item in the list, the backward pointer identifies the previous item in the list and the group number denotes an arbitrary data set collection. In list L1 the most recently referenced item is 9, while the least recently referenced item is 11. These are respectively designated F = 9 and La = 11. As mentioned, this is a linked list format. The last item in the list must never be referenced. *This LRU list is partitioned into k + 3 groups.* In Fig. 1, k = 3. All items in group r have g = r.

The Table Construction

Table T1 contains k + 3 rows and c columns with k = 3. In Table 1, row r contains data about group r and the list. Column M contains the maximum number of items in the list which can be allocated to the group corresponding to row r. Column A contains the number of items in the list currently allocated to the group corresponding to row r. Column H sets out the number of times that the referenced item was currently allocated to the group corresponding to row r. Lastly, column L contains the number of the item which is the last item in the group corresponding to row r. Other columns in Table T1 can be used to store other information about each group of items in the list. The notation T1 (r,A) designates that the entry in Table T1 at row r, column A, designating the actual capacity of a group can increase or decrease as items are referenced and the invention method executed. However, the relation $-1 < T1(r,A) < 1 + T1(r,M)$ holds for all values of r lying in the range $0 < r < k + 4$.

The notation T1(1,M) designates the maximum number of items that can be stored in a cache of capacity c1 bytes. T1(1,M) + T1(2,M) designates the maximum number of items that could be stored in a cache of capacity c2 bytes, i.e., c2 > c1. Furthermore, T1(1,M) + T1(2,M) + T1(3,M) represents the maximum number of bytes that could be stored in a cache of capacity c3 bytes, where c3 exceeds c2, etc. Lastly, T1(k + 1,M) = T1(k + 2,M) stands for the total number of items in the list that can be referenced. Significantly, the last in the list cannot be referenced; therefore, T1(k + 3,M) = 1.

Selecting Cache Sizes to Measure Hits/Misses

Fig. 1 represents a partition of an LRU stack into equivalence classes based upon the cache capacities of interest. But what are the capacities of interest? Most simply, these are obtained by *consecutive addition of the maximum allowable group sizes represented by column M in Table T1.* Namely, c1 = 3, c2 = 3 + 4 = 7, c3 = 3 + 4 + 3 = 10, c4 = c3 + 10 = 20, c5 = c4 + 10 = 30, c6 = c5 + 1 = 31.

How does one determine whether a reference to an item for a given cache size $c_i$ is a hit or a miss? It would follow that reference to any item in group 1 is a hit given that c1 ± 3. Also, reference to any item in group 2 would be a miss for a buffer of size 3 or less, while hit would be considered a hit for a buffer of any size 7 or more. *The rule is that the group number of any item i in an LRU stack is registered as a miss for all cache capacities less than the group number and a hit for all cache capacities equal to or greater than the group number.*

Hits, Misses, and Overflow, Generally

Each request to data stored on DASD is a request to a physical location. In this invention, each physical location that is referenced must be assigned a number. Thus, a request to READ, WRITE, or ERASE data at location y is translated into a request for item number y with code = (r, w, or e). The detailed processing responsive to a READ or WRITE request is given in Fig. 3, while the processing responsive to an ERASE request is given in Fig. 4. The methods update T1 (r, H). This entry in Table 1 counts the number of hits to group r. At the end of a sequence of requests, the counters T1 (r, H) each contain the data needed to determine the hit ratio to data caches of capacity c1, c2, c3, etc., bytes. Additionally, if all items are initially in group k + 1, then T1 (k + 1, H) gives the number of unique items referenced. Likewise, T1 (k + 2, H) gives the number of times a location has been erased and was subsequently reused for new data. The method illustrated in Figs. 3 and 4 assumes that the list L1 is stored as a Table L1, shown in Fig. 2. Such a Table L1 will have as many rows as there are items being referenced, plus one, as well as entries for the counterpart n-tuples <f,b,g>. Also, L1 (p, g) refers to the number stored in row p, column g, of Table L1.

When item y represents a READ or WRITE reference, then row y, column g, in Table L1 determines the group r to which item y is currently allocated. Row r, column H, in Table T1 is increased by 1 to indicate a 'hit' in the data cache. This means that if a data cache of capacity c or larger had been used, the referenced item would have been found. *Significantly, item y should then become the first item in the list L1 and the first item in group 1 by having the values in Table L1, row y, changed appropriately because it is the most recently referenced item.* Other items in the list may now change their group numbers. For example, if group 1 has the maximum number of items already allocated to it, the last member of that group must be pushed down the list into the next group by changing its group number from 1 to 2. The last item in group 1 is now different. If group 2 also has the maximum number of items already allocated to it, its last member must be pushed down the list into the next group by changing its group number from 2 to 3. The last item in group 2 is now different. This process is continued until an item is pushed into a group *with less than* the maximum number of items allocated to it. The number of items allocated to this group is increased by 1 and the method is ready to be applied to the next referenced item. The detailed method steps will be subsequently discussed with reference to Fig. 3.

When an item y is to be *erased,* this means that row y, column g, in Table L1, determines the group r to which y is currently allocated. After this, row r, column A, in Table T1 is *decreased by 1* in order to show that one fewer item is allocated to this group. Item y is then removed from group r and is put as the next-to-last item in the list. That is, it is placed as the last item in group k + 2. This is accomplished by changing the values in Table L1, row y, to the appropriate values. The method steps referencing erasure will be subsequently discussed with regard to Fig. 4.

Cache Managing In A Real Paging System — Flush Avoidance

In a real paging system cache data elements may be invalidated (erased) because the information they represent is no longer needed; i.e., when the process is either suspended or terminated.

This invention is operable in a hierarchical storage system having an LRU/MRU page replacement policy. However, sequential referencing using an LRU replacement policy fills the cache with references never again accessed. This flushing of the cache can destroy cache use for a competing process. Such a consequence also accrues for randomised referencing. That is, the probability of referencing the same item again is near zero. This means that there is a low hit ratio for virtually any given cache size. By the method of this invention, sequential and/or random access by a competing process will result in a small or zero cache size allocation for that process, thus avoiding flushing the entire system cache or obtaining a small number of hits to a large preallocated cache space for the given process.

Illustrative Examples

Suppose reference was made to item 8 as seen in list L1 of Fig. 1, and Table L1 of Fig. 2. It is clear that item 8 is a member of group 4. Consequently, item 8 must be removed from group 4 and placed on top of the list; that is, the first element in group 1. This increases the size of group 1 to 4 members. Referencing Table T1 at T1 (1, M) shows that it is allowed a maximum of only 3. It is thus necessary to manage the push-down overflow of list L1. According to the rules governing the invention, element 10, shown as the last element of group 1, becomes the first element of group 2. This increases the size of group 2 to 3 members. Referencing Table T1 at T1 (2, M) shows that it is allowed a maximum of 4 members, so no further push-down is required.

A hole was created by removal of the most recently referenced item 8 for placement at the top of the list in group 1, there is no further overflow with respect to group 2; and changes must be made in all the affected tabular entries, such as the last item in each group reference with respect to Table T1, and the modification of the pointers in Table L1. It also follows that the count in T1 (4, H) will be increased by 1, since the referenced item would be located in the cache containing group 4. Lastly, the actual occupancy of a cache will only equal its maximum if there are no invalidations, so that for most purposes m ≥a.

Special Circumstances

If the first item in the cache is referenced, it will remain the first item afterwards. If an item is not the first item of group 2, while group 1 has been totally invalidated, then the item is the first item in the list de facto.

A subtle point to consider is that there is really no correspondence between group and cache, but rather, correspondence between groups. That is, groups are synonymous with a particular cache size. For instance, a group 1 item would be resident in a cache of size c1. A group 2 item would be resident in a cache of size c2, where c2 is the sum of the table of maximum items allowed to groups 1 and 2.

The Method Step Responses To Each READ/WRITE Reference

Referring now to Fig. 3, there is shown the method steps responsive to each READ or WRITE reference. Starting at step A, it is first necessary to determine whether item y is the first item on list L1. If it is, then is the group number for item y equal to 1? If so, the referenced item is already at the top of the list and the only processing necessary is to increment T1 (1, h) by +1. This is accomplished in step C, with step D representing process completion. On the other hand, if item y is the first item on the list (except for group 1), then it can only mean that it is the top of the list of the next inferior group under circumstances where all of the elements in group 1 have previously been erased. This means the process step E is invoked in which, after the group number of item y is ascertained, both the group number, the hits, and the list position are updated. After this, the processing is completed and moved to step D.

Now, if item y is not the first item in the list, the processing moves from step A to step F. Here, the first three entries are concerned with determining the group, previous item, and next item from list L1, and then altering these pointers so as to make the referenced item the first item in the list. Also, the referenced T1 (g, H) is updated by +1. It is necessary to determine whether the referenced item y was the last member of some group g. That is, was it identified in Table T1 (G, L)? If so, it is processed through the loop steps G and H. In step H, P is made the last item and item y is removed. If item y is not the last item, processing continues in step I, where item y is removed from the old position in list L1 and inserted to the top of the list.

The next step J tests whether removed item y was from group 1. If yes, then processing is completed at step K because removed item y is at the top of the list and no further processing is required. On the other hand, if item y was not in group 1, it is necessary to set the loop index I initially to 1 and push down the other items in the LRU list from group to group. This is done through the processing loop steps of L, M, N, O. In step L, the pointer to the next item n is set equal to T1 (i, L). In step M, the question is rather group i is fully allocated. If not, its actual capacity is increased by 1, as represented in step Q, and the capacity of group G is decreased by 1. If group i is fully allocated, then processing continues in step N. Step N processing ascertains whether the bottom member of a superior group becomes the top member of the next inferior group. When this is accomplished, processing continues in step O. Step O determines whether the referenced item is removed from group g. If this is the case, then space is fully allocated and processing is completed by movement to step P. If not, then the overflow must be managed with reference to the next inferior group, as represented by cycling through steps L, M, N, O, one more time.

If group i is not fully allocated according to the processing of step M, (that is, that the maximum number of elements is not equal to the allocated number of elements in group i), then processing continues in step Q. Step Q adds +1 to allocated members of group i and decreases the allocation of group G. Significantly, step R tests whether the reference was for a READ or WRITE. If it was to a READ, then processing moves to step T and step U. At step U a test is made to determine if group i is empty. If group i is not empty, processing is completed by moving to step P. If group i is empty, y is made the last element of group i and the same test is made for the next group by cycling through steps U and V. If the reference was to a WRITE operation, then it is necessary to update the hit by +1 at table location T1 (i, H). Stated another way, a WRITE reference to a cache having a "hole" in the stack or having the data already entered is registered as a hit. A "miss" requires LRU processing in order to make a hole.

It is possible that a referenced item y can be the last item of more than one group in list L1. This arises as a consequence of how items are erased from lists. In this regard, the loop represented by steps G and H test whether y is the last member of the nest group and continues around until y is not the last member of group g.

The most frequently traversed paths by READ/WRITE references includes steps A, F, G, I, J, L, M, N, O, P, with a sidewise trip to Q, R, T, U. The remaining loops are for the anomalies.

The Method Step Responses To Each ERASE Reference

Referring now to Fig. 4, there is shown the processing where it is desired to delete an element either because it is no longer needed by an executing process, the process has itself been suspended or terminated, or a cache is full. The process starts in step B1 by determining the pointers to the previous item and the next item and then testing whether the erased item is the first item in the LRU list. If it is, then the processing continues in step B2 where the remaining steps are indexed by I being set initially to 1 and the first item in the list being replaced by the next item. Processing continues through steps C and D, which determine whether the referenced item is the last item of group i. Since this is usually not the case, processing would continue again in step E. Here, the back pointer of the next item is replaced with the value of the item itself. This is because the first item in the list and its pointers must be self-referencing. After step E, processing continues in step L. Step L has two objectives. The first is to remove the referenced item from the LRU list and insert the item as the last item in the next-to-last group. The second is to increase the allocation of the k-1st group by +1.

Steps B, C, E, and L require some explanation. First, the cache is structured so that all groups but the last three are empty. Group k + 1 contains every item that can be referenced. Group k + 2 holds items that have been erased. Group k + 3 contains one item which can never be referenced. Normally, y will not be the first item in the list, so that steps F, G, J, and L will be entered. Steps F, G, H, I, and J all deal with the anomaly that y is the last member of some group. Step L removes y from group G, decreases the number allocated to group G by 1, puts y as the last element of group k + 2, and increases the number of items allocated to group k + 2 by 1.

For each of the q data groups (paged data, non-paged data, etc.), the steps outlined in Figs. 3 and 4 are applied to every reference in a predetermined time interval. The values of T (i, H), for i = l to p in a given data group, give the additional hits that could be obtained for increasing the cache size by an amount necessary to hold T (i, M) additional items in that data group. From these numbers, the relationship between cache hits and cache size can be determined for the preselected p cache sizes and q data groups. In no more than $(p + 1)^q$ computations the allocation of the system cache to the q data groups can be determined such that the number of hits to the system cache is maximised for that time interval.

System/370 Assembly-Level Execution Sequence

The following table is an assembly-level language sequence, which, when invoked upon a processor of the type previously described, executes the method steps of the invention. These are set out in three tables. Table 1 sets out the comment field and defines selected terms, including the set up and test as to whether a referencing CCW is a READ/WRITE or ERASE. Table 2 is an implementation of the ERASE processing set out in Fig. 4. Lastly, Table 3 is an implementation of the READ/WRITE referencing of Fig. 3. The entries in each of the tables are letter-coded to correspond to the counterpart step in the counterpart figure. It should be noted that the assembly code listings are in source code format. This means that the extreme left-hand column represents flags, the next column is the instruction op code, the third column is parameter or address information, while the extreme right column defines a comment field. Only the first three columns are compilable into object code. The comment fields are ignored by the computer.

PROGRAM STARTS HERE

THIS IS THE ASSUMED CONTROL BLOCK STRUCTURE FOR M1

| 00 | BOX MEMORY ORIGIN | | |
| 04 | Y (INPUT TO BOX) | | |
| 08 | CODE DEE | COUNT O | |
| 14 | EPTR | | |
| 18 | VALUE Y(F) | VALUE Y(B) | Y(D) |
| 25 | ADDR(START) | ADDR(Y) | 1 |
| 32 | ADDR(END 1) 2 | COUNT 1 | INCR 1 |
| 44 | ADDR(END 2) 3 | COUNT 2 | INCR 2 |

| 200 | ADDR(END 15) 16 | COUNT 15 | INCR 15 |
| 212 | ADDR(END 16) 17 | COUNT 16 | INCR 16 |
| 224 | 0 | 0 | -1 |

Table 1

EJECT

| M1 | DS | 0H | R1-->CONTROL BLOCK,  R2 -->CURRENT REF. |
|---|---|---|---|
| | STCM | R2,7,AY(R1) | AY = ADDRESS OF Y |
| | CLI | CODE(R1),C'E' | IF CODE = E THEN FREE SLOT |
| | BNE | M1NWO | ELSE GO TO M1NWO |
| M1FO | DS | 0H | ALGORITHM WHEN CODE = E |
| | MVC | VYF(7,R1),FP2(R2) | VYF = Y.F, VYB = Y.B, VYD = Y.D |
| | CLC | AY(3,R1),ASTART(R1) ⓐ | IF AY ¬= ASTART ⓐ |
| | BNE | M1FC | THEN GO TO M1FC |
| | MVC | ASTART(3,R1),FP2(R2) ⓑ | ELSE ASTART = VYF ⓑ |
| | LA | R15,AEND1(0,R1) | X = 1 |
| M1FA | CLC | AY(3,R1),0(R15) ⓒ | M1FA:IF AY ¬= AENDX ⓒ |
| | BNE | M1FB | THEN GO TO M1FB |
| | MVC | 0(3,R15),FP2(R2) ⓓ | ELSE AENDX = VYF |
| | LA | R15,12(0,R15) | X = X+1 ⓓ |
| | B | M1FA | GO TO M1FA |
| M1FB | ICM | R2,7,VYF(R1) | MAKE NEW START POINT TO ITSELF |
| | MVC | BP2(3,R2),VYF(R1) ⓔ | YF.B = VYF ⓔ |
| | B | M1FG | GO REMOVE Y FROM TOP OF LIST |
| M1FC | SR | R15,R15 | X = 0 |
| | IC | R15,VYD(0,R1) ⓕ | |
| | MH | R15,M1TWELVE+2 | |
| M1FD | C | R15,M1TWELVE | M1FD: IF X = 1 THEN GO TO M1FE |
| | LA | R2,8(R15,R1) ⓖ | |
| | BE | M1FE | |
| | CLC | AY(3,R1),0(R2) ⓗ | IF AEND(X-1) ¬= AY |
| | BNE | M1FE | THEN GO TO M1FE |
| | S | R15,M1TWELVE ⓘ | ELSE X = X - 1 |
| | B | M1FD | GO TO M1FD |
| M1FE | LA | R2,12(0,R2) | M1FE: IF AENDX ¬= AY |
| | CLC | AY(3,R1),0(R2) ⓙ | THEN GO TO M1FF |
| | BNE | M1FF | ELSE AENDX = VYB |
| | MVC | 0(3,R2),VYB(R1) ⓚ | X = X + 1 |
| | B | M1FE | GO TO M1FE |
| M1FF | ICM | R2,7,VYF(R1) | REMOVE Y FROM LIST |
| | MVC | BP2(3,R2),VYB(R1) | YF.B = VYB |
| M1FG | ICM | R2,7,VYB(R1) | |
| | MVC | FP2(3,R2),VYF(R1) | YB.F = VYF |
| | SR | R15,R15 | |
| | IC | R15,VYD(0,R1) | |
| | MH | R15,M1TWELVE+2 ⓛ | |
| | LA | R0,1 | INCR D = INCR D+1 |
| | AL | R0,28(R1,R15) | |
| | ST | R0,28(R1,R15) | |
| | LH | R15,EPTR(0,R1) | INSERT Y AT END OF LIST |
| | LA | R15,0(R15,R1) | |
| | ICM | R2,7,0(R15) | |

Table 2

```
MVC   VYB(4,R1),BP2(R2)        VYB = ENDN.B, VYD = N
MVC   BP2(3,R2),AY(R1)         ENDN.B = AY
ICM   R2,7,VYB(R1)
MVC   VYF(3,R1),FP2(R2)        VYF = AENDN
MVC   FP2(3,R2),AY(R1)         ENDNB.F = AY
ICM   R2,7,AY(R1)          (L)
MVC   FP2(7,R2),VYF(R1)        Y.F = VYF, Y.B = VYB, Y.D = VYD
```

```
LA    R0,1                 COUNT NUMBER OF FREE COMMANDS
A     R0,16(0,R15)            COUNT(N+1) = 1 + COUNT(N+1)
ST    R0,16(0,R15)
```

```
B     M1EXIT           } (M)  GO TO RETURN TO CALLER
```

Table 2 (Cont'd)

```
M1W0      DS   OH            ALGORITHM WHEN CODE = R OR W

          CLC  AY(3,R1),ASTART(R1) ⎫ Ⓐ  IF CURRENT INPUT ¬ = LAST INPUT
          BNE  M1NWB               ⎭        THEN GO TO M1NWB

          CLI  D(R2),X'01'    ⎫ Ⓑ   IF Y.D ¬ = 1
          BNE  M1NWA          ⎭          THEN GO TO M1NWA

          L    R0,COUNT0(R1)  ⎫        COUNT(0) = 1 + COUNT(0),
          AL   R0,M1ONE       ⎪
          ST   R0,COUNT0(R1)  ⎬ Ⓒ
          MVI  DEE(R1),X'00'  ⎪     DEE = 0,
          B    M1EXIT         ⎭ Ⓓ  GO TO M1 EXIT

M1NWA     SR   R15,R15        ⎫
          IC   R15,D(0,R2)    ⎪
          S    R15,M1ONE      ⎪
          MH   R15,M1TWELVE+2 ⎪
          LA   R15,AEND1(R15,R1) ⎪
          L    R0,4(0,R15)    ⎪       COUNT D = 1 + COUNT D
          A    R0,M1ONE       ⎪
          ST   R0,4(0,R15)    ⎪ Ⓔ
          L    R0,8(0,R15)    ⎬    CREATE HOLE IN REGION D
          A    R0,M1ONE       ⎪        INCR D = 1 + INCR D
          ST   R0,8(0,R15)    ⎪
          LA   R15,AEND1(0,R1)⎪    DELETE HOLE IN REGION 1
          L    R0,8(0,R15)    ⎪        (INCR 1) = (INCR 1) - 1
          S    R0,M1ONE       ⎪
          ST   R0,8(0,R15)    ⎪
          MVI  D(R2),X'01'    ⎭    Y.D = 1
          B    M1EXIT         ⎭ Ⓓ  GO TO M1 EXIT

M1NWB     MVC  VYF(7,R1),FP2(R2)  ⎫  VYF = Y.F, VYB = Y.B, VYD = Y.D
          SR   R0,R0          ⎪
          IC   R0,VYD(0,R1)   ⎪    DEE = Y.D
          STC  R0,DEE(R1)     ⎪
          MVC  FP2(7,R2),ASTART(R1)  Y.F = ASTART, Y.B = AY, Y.D = 1
          BCT  R0,M1NWC       ⎬ Ⓕ
M1NWC     LR   R15,R0         ⎪
          MH   R15,M1TWELVE+2 ⎪
          LA   R15,AEND1(R15,R1) ⎪
          L    R2,4(0,R15)    ⎪    COUNT(D) = 1 + COUNT(D)
          AH   R2,M1ONE+2     ⎪
          ST   R2,4(0,R15)    ⎭

M1NWD     CLC  AY(3,R1),0(R15)  ⎫ Ⓖ  IF AY ¬ = AEND D
          BNE  M1NWE          ⎭        THEN GO TO M1NWE
          MVC  0(3,R15),VYB(R1) ⎫      ELSE AEND D = VYB
          LA   R15,12(0,R15)  ⎬ Ⓗ        D = D + 1
          B    M1NWD          ⎭          GO TO M1NWD
```

Table 3

11

```
M1NWE   SR    R2,R2                    REMOVE Y FROM LIST
        ICM   R2,7,VYB(R1)
        MVC   FP2(3,R2),VYF(R1)             YB.F = VYF
        ICM   R2,7,VYF(R1)
        MVC   BP2(3,R2),VYB(R1)   (I)      YF.B = VYB

        ICM   R2,7,ASTART(R1)
        MVC   BP2(3,R2),AY(R1)    START.B = AY
       ·MVC   ASTART(3,R1),AY(R1)  ASTART = AY

        CLI   VYD(R1),X'01'  } (J)    IF VYD = 1 THEN GO TO M1EXIT
        BE    M1EXIT         } (K)

        LA    R15,AEND1(0,R1) (L)    X = 1

M1NWF   CLC   8(4,R15),M1ZERO (M)    IF INCR X ¬= 0 THEN GO TO M1NWG
        BNE   M1NWG                       BECAUSE THERE IS A HOLE TO FILL
        ICM   R2,7,0(R15)           PUSH LRU ITEM TO NEXT REGION
        MVC   D(1,R2),3(R15)  (N)     ENDX.D = 1 + ENDX.D
        MVC   0(3,R15),BP2(R2)        AENDX = ENDX.B
        LA    R15,12(0,R15)         X = X + 1
        BCT   R0,M1NWF        } (O) IF X < D THEN GO TO M1NWF
        B     M1EXIT          } (P) IF X = D THEN GO TO M1EXIT

        L     R2,8(0,R15)           REMOVE HOLE FROM REGION X
        S     R2,M1ONE                  (INCR X) = (INCR X) - 1
        ST    R2,8(0,R15)
        SR    R2,R2                 PUT HOLE IN REGION D
        IC    R2,VYD(0,R1)    (Q)       (INCR D) = (INCR D) + 1
        MH    R2,M1TWELVE+2
        L     R0,28(R2,R1)
        A     R0,M1ONE
        ST    R0,28(R2,R1)

        CLI   CODE(R1),C'W'  } (R)    IF CODE ¬= 'W'
        BNE   M1NWH                      THEN GO TO M1NWH

        LA    R2,1                  IF CODE = 'W' COUNTX = COUNTX + 1
        AL    R2,4(0,R15)    } (S)    BECAUSE IT IS A WRITE HIT TO
        ST    R2,4(0,R15)                     THE HOLE

M1NWH   ICM   R2,7,0(R15)    } (T) I = 1
M1NWI   CLC   D(1,R2),3(R15) } (U) IF ENDX.D < ENDI.D+1
        BL    M1EXIT         } (P)     THEN GO TO M1EXIT

        MVC   0(3,R15),AY(R1)     AENDX = AY
        LA    R15,12(0,R15)  (V)  X = X + 1
        B     M1NWI               TO TO M1NWI
```

Table 3 (Cont'd)

```
M1DATA      DS    0F
N1ZERO      DC    F'0'              ' ZERO
M1ONE       DC    F'1'              ' ONE
M1SEVEN     DC    F'7'              ' SEVEN
M1TWELVE    DC    F'12'             ' TWELVE
```

```
            PROGRAM ENDS HERE
```

```
M1EXIT      L     R13,4(0,R13)
            LM    R14,R12,12(R13)
            BR    R14
```

```
            DATA STARTS HERE
```

```
            DS    0F
            LTORG
            DS    0F
SA00001     DS    18F
            DC    V(TMA1WSET)
```

```
            END   TMA1M1
```

## Claims

1. A method for partitioning memory space in a multiprocessing system having shared paging storage and a storage manager therefor partitioning it into sectors private to individual running processes, enforcing a common replacement protocol across the sectors and enabling address translation, read and write accessing, erasing and updating characterised in that, in addition to the maintenance of those facilities appropriate to the actual exercising of the shared storage, the storage manager maintains, for each running process, a list of ordered segment hit counts for each of an ordered sequence of segments (segment string) of a fictional maximum sector, the segments not all being of the same page capacity, and an ordered page identity stack of a capacity equal to the page capacity of the fictional maximum sector, each position in the stack uniquely associating the page identity, if any, contained therein with one of the fictional segments, the order of page identities in the stack being adjusted in response to each actual page access (including additions and deletions) to represent the relative replacement order of the corresponding pages, the actual accessing of a page causing the hit count for the segment corresponding to the stack position containing the page identity at the time of the access to be incremented, the storage manager determining the optimum partitioning, and so partitioning the storage, by totalling the hit counts for each of the various combinations of segment string lengths of all the lists representing an aggregate segment page capacity not exceeding the available storage page capacity, determining the highest total and defining the sectors in terms of the aggregate segment page capacity of the lengths of the segment strings providing that highest total.

2. A method as claimed in claim 1 wherein the storage manager is responsive, for the purposes of repartitioning, to the invoking of a new process, to a periodic timer, and, optionally, to the deletion of a process.

## Patentansprüche

1. Verfahren zum Untergliedern von Speicherplatz in einem Mehrprozessorsystem mit gemeinsam genutztem Seitenspeicher und einem Speicherplatz-Verwalter dafür für seine Untergliederung in individuellen Betriebsprozessen zugeordneten Sektoren mit Abwicklung eines gemeinsamen Replacement-Protokolls über die Sektoren und der Möglichkeit von Adress-Übersetzungen für Lese- und Schreibzugriff, Löschen und Fortschreiben, dadurch gekennzeichnet, daß zusätzlich zu der Aufrechterhaltung dieser geeigneten Maßnahmen zur aktuellen Ausübung des gemeinsamen Speichers, der Speicherplatz-Verwalter für jeden laufenden Prozess eine Liste von segmentbezogenen Trefferzählraten für jede von einer bezogenen Sequenz der Segmente (Segmentfolge) von einem fiktiven Maximum-Sektor erhält, wobei die Segmente nicht alle die gleiche Seitenkapazität und ein bezogenes Seitenidentitätsstack einer Kapazität gleich der Seitenkapazität des fiktiven Maximumsektors haben, jede Position in dem Stack eindeutig entsprechend der, wenn überhaupt, darin enthaltenen Seitenidentität mit einem von den fiktiven Segmenten, die Anweisung der Seitenidentität in dem Stack eingestellt wird abhängig von jedem aktuellen Seitenzugriff (einschließlich Addition und Löschen) zur Darstellung des relativen Replacement Befehls der entsprechenden Seiten, der tatsächliche Zugriff von einer Seite den Trefferzähler für das Segment entsprechend der die Seitenidentität zu der Zeit des Zugriffs, der inkrementiert wird, enthaltenen Stack-

13

# 0 058 846

positionen auslöst, der Speicherplatz-Verwalter die optimale Untergliederung, bestimmt und damit den Speicher durch Summierung der Trefferzählwerte für jede der verschiedenen Kombinationen der Segment-String-Längen von allen der Listen, die eine Aggregatsegmentseitenkapazität darstellen, die verfügbare Speicherseitenkapazität nicht überschreitend untergliedern, die höchste Summe bestimmen und die Sektoren im Sinne von der Summensegmentseitenkapazität der Längen von den Segmentstrings die höchste Summe voraussetzend definieren.

2. Verfahren nach Anspruch 1, dadurch gekennzeichnet, daß der Speicherplatzverwalter für die Untergliederungszwecke auf das Aufrufen eines neuen Ablaufes auf einen periodischen Zeitgeber und, fakultativ, auf das Löschen eines Ablaufes anspricht.

## Revendications

1. Procédé de partition d'un espace mémoire dans un système à multitraitement comprenant une mémoire paginée commune et un gestionnaire de mémoire pour celle-ci la partitionnant en secteurs propres à des processus tournant de façon individuelle, mettant en oeuvre un protocole de remplacement commun au travers des secteurs et permettant une traduction d'adresse, un accès en lecture/écriture, un effacement et une mise à jour, caractérisé en ce que, en plus du maintien du dispositif approprié à la mise en oeuvre effective de la mémoire commune, le gestionnaire de mémoire maintient, pour chaque processus en cours, une liste de comptages ordonnés de touchés de segments pour chacun d'une séquence ordonnée de segments (chaîne de segments) d'un secteur fictif maximal, les segments n'ayant pas tous la même capacité de pages, et une pile ordonnée d'identités de pages de capacité égale à la capacité de page du secteur fictif maximal, chaque position dans la pile associant de façon spécifique l'identité de la page, s'il y en a, qui y est contenue avec l'un des segments fictifs, l'ordre des identités de pages dans la pile étant réglé en réponse à chaque accès de page en cours (incluant des additions et des suppressions) pour représenter l'ordre de remplacement relatif des pages correspondantes, l'accès réel d'une page provoquant le comptage de touchés pour le segment correspondant à la position de pile contenant l'identité de page à l'instant où l'accès doit être incrémenté, le gestionnaire de mémoire détermine la partition optimale, et partitionnant ainsi la mémoire, en totalisant les comptages de touchés pour chacune de diverses combinaisons de longueur de chaînes de segments de toutes les listes représentant une capacité totale de pages de segments ne dépassant pas la capacité de page de mémoire disponible, déterminant le total le plus élevé et définissant les secteurs en termes de capacité totale de pages de segments des longueurs des chaînes de segments fournissant ce total le plus élevé.

2. Procédé selon la revendication 1, dans lequel le gestionnaire de mémoire agit, dans des buts de repartition en réponse à l'appel d'un nouveau processus, à un temporisateur périodique et optionnellement à la suppression d'un processus.

14

## FIG. 1

ORDERED LIST L1 — ITEM

| | | n-TUPLE f, b, g | |
|---|---|---|---|
| F=9 | 9 | 2, 9, 1 | GROUP 1 |
| | 2 | 10, 9, 1 | |
| | 10 | 6, 2, 1 | |
| | 6 | 5,10, 2 | GROUP 2 |
| | 5 | 1, 6, 2 | |
| | 1 | 7, 5, 3 | GROUP 3 |
| | 7 | 8, 1, 3 | |
| | 8 | 4, 7, 4 | GROUP 4 |
| | 4 | 3, 8, 4 | |
| | 3 | 11, 4, 5 | GROUP 5 |
| La=11 | 11 | 11, 3, 6 | GROUP 6 |

TABLE T1

| GROUP | M, A, H, L |
|---|---|
| 1 | 3, 3, 0,10 |
| 2 | 4, 2, 1, 5 |
| 3 | 3, 2, 3, 7 |
| 4 | 10, 2, 1, 4 |
| 5 | 10, 1, 2, 3 |
| 6 | 1, 1, 0,11 |

ORDERED LIST L1 AND TABLE T1 FOR k=3

**FIG. 1**

TABLE L1

| ITEM NUMBER | f, b, g |
|---|---|
| 1 | 7, 5, 3 |
| 2 | 10, 9, 1 |
| 3 | 11, 4, 5 |
| 4 | 3, 8, 4 |
| 5 | 1, 6, 2 |
| 6 | 5,10, 2 |
| 7 | 8, 1, 3 |
| 8 | 4, 7, 4 |
| 9 | 2, 9, 1 |
| 10 | 6, 2, 1 |
| 11 | 11, 3, 6 |

| $\frac{F}{9}$ | $\frac{La}{11}$ |
|---|---|

TABLE T1

| | M, A, H, L |
|---|---|
| 1 | 3, 3, 0,10 |
| 2 | 4, 2, 1, 5 |
| 3 | 3, 2, 3, 7 |
| 4 | 10, 2, 1, 4 |
| 5 | 10, 1, 2, 3 |
| 6 | 1, 1, 0,11 |

TABLE L1 AND TABLE T1 FOR k=3

**FIG. 2**

1

FIG.3 GPPF STACK PROCESSING ALGORITHM WHEN CODE = R OR W

START

B1
P <-- L1(Y,b)
N <-- L1(Y,f)

A
F = Y ?

YES

NO

F
I <-- L1(Y,g)
I* <-- I

B2
I <-- 1
F <-- N

C
Y = T1(I,L) ?

NO

YES

G
I* = 1 ?

YES

NO

E
L1(N,b) <-- N

D
T1(I,L) <-- N
I <-- I+1

H
Y = T1(I*-1,L) ?

YES

NO

I
I* <-- I*-1

K
T1(I,L) <-- P
I = I+1

YES

J
Y = T1(I,L) ?

NO

L
L1(N,b) <-- P

L1(P,f) <-- N
G <-- L1(Y,g)
T1(G,A) <-- T1(G,A) - 1
P <-- L1(La,b)
L1(P,f) <-- Y
L1(La,b) <-- Y
L1(Y,f) <-- La
L1(Y,b) <-- P
L1(Y,g) <-- K-1
T1(K-1,L) <-- Y
T1(K-1,A) <-- T1(K-1,A) + 1

M
DONE

**FIG.4** GPPF STACK PROCESSING ALGORITHM WHEN CODE = E

START

NEXT CCW
REFERENCE

REFERENCED
ADDRESS
IN CACHE?

NO

YES

LOCATION
AVAILABLE
IN CACHE?

NO

YES

LRU PROCESSING TO
MAKE LOCATION
AVAILABLE

COPY REFERENCED
DATA FM
BACKING STORE
INTO CACHE

DEREFERENCED
DATA
MODIFIED WHILE
IN
CACHE?

YES

NO

COPY REQUESTING
TABLES

UPDATE CACHE
DIRECTORY

DELETE DEREFERENCED
ITEM

NO WRITEBACK TO
BACKING STORE

WRITEBACK
INTO BACKING
DELETE
DEREFERENCED
ITEM FROM
CACHE

(PRIOR ART)

FIG.5    CACHE MANAGER OPERATIONS